(19) Europäisches Patentamt — European Patent Office — Office européen des brevets

(11) **EP 2 883 042 B1**

(12) **EUROPÄISCHE PATENTSCHRIFT**

(45) Veröffentlichungstag und Bekanntmachung des Hinweises auf die Patenterteilung:
**25.07.2018 Patentblatt 2018/30**

(21) Anmeldenummer: **13747402.9**

(22) Anmeldetag: **09.08.2013**

(51) Int Cl.:
*G01N 25/72* (2006.01)  *G01R 31/26* (2014.01)
*G01N 21/66* (2006.01)

(86) Internationale Anmeldenummer:
**PCT/EP2013/066701**

(87) Internationale Veröffentlichungsnummer:
**WO 2014/023823 (13.02.2014 Gazette 2014/07)**

(54) **VERFAHREN UND VORRICHTUNG ZUM PRÜFEN VON PHOTOVOLTAIKMODULEN**

METHOD AND DEVICE FOR INSPECTING PHOTOVOLTAIC MODULES

PROCÉDÉ ET DISPOSITIF D'ESSAI DE MODULES PHOTOVOLTAÏQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.08.2012 DE 102012107316**

(43) Veröffentlichungstag der Anmeldung:
**17.06.2015 Patentblatt 2015/25**

(73) Patentinhaber: **SOLARZENTRUM STUTTGART GMBH**
**70197 Stuttgart (DE)**

(72) Erfinder:
• **STOICESCU, Liviu-Mihai**
**70191 Stuttgart (DE)**
• **REUTER, Michael**
**70178 Stuttgart (DE)**
• **WERNER, Juergen H.**
**70197 Stuttgart (DE)**

(74) Vertreter: **Witte, Weller & Partner Patentanwälte mbB**
**Postfach 10 54 62**
**70047 Stuttgart (DE)**

(56) Entgegenhaltungen:
EP-A1- 2 410 319     EP-A1- 2 463 672
EP-A2- 2 421 052     DE-A1- 4 440 167
DE-A1- 10 240 060    DE-A1-102010 010 509
US-A1- 2009 297 017  US-A1- 2010 073 665
US-A1- 2010 201 374  US-A1- 2012 160 295

• BAZILIAN M D ET AL: "Thermographic analysis of a building integrated photovoltaic system", RENEWABLE ENERGY, PERGAMON PRESS, OXFORD, GB, Bd. 26, Nr. 3, 1. Juli 2002 (2002-07-01), Seiten 449-461, XP004335608, ISSN: 0960-1481, DOI: 10.1016/S0960-1481(01)00142-2

**EP 2 883 042 B1**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Verfahren zum Prüfen von Photovoltaikmodulen, mit den folgenden Schritten:

- Aufmodulieren einer Wechselspannung auf ein Photovoltaikmodul;
- Scannen des Photovoltaikmoduls mit einer Kamera und
- Auswerten des von der Kamera erzeugten Kamerasignals unter Verwendung eines Filters,
- wobei das Photovoltaikmodul nur in seiner Vorwärtsrichtung betrieben wird.

Die Erfindung betrifft ferner eine Vorrichtung zur Prüfung eines Photovoltaikmoduls, mit einer Einrichtung zum Aufmodulieren eines Wechselspannungssignals auf das Photovoltaikmodul, mit einer Kamera zum Scannen des Photovoltaikmoduls, die ein Kamerasignal ausgibt, und mit einer Auswerteeinrichtung, die eine Schaltung zur Auswertung des Kamerasignals nach dem Lock-in-Verfahren aufweist, wobei das Photovoltaikmodul nur in Vorwärtsrichtung betrieben ist.

Ein derartiges Verfahren und eine derartige Vorrichtung sind aus der US 2010/0073665 A1 bekannt.

Hierbei wird eine Infrarot-Kamera über die Probe mit einer konstanten Geschwindigkeit bewegt, während ein optisches oder elektrisches Modulationssignal aufgeprägt wird und die Probe über die Infrarot-Kamera ausgewertet wird. Die Infrarotbilder werden gefiltert, um zeitverzögerte Lock-in-Thermografie-Bilder zu erzeugen, die zur Identifizierung von Defekten verwendet werden.

Aus der US 2010/0201374 A1 sind ein weiteres Verfahren und eine weitere Vorrichtung zur Detektion von Kurzschlüssen in Photvoltaikmodule und anderen optoelektronischen Einrichtungen bekannt, wobei ein Elektrolumineszenz-Abbildungssystem verwendet wird, mit dem eine Emission einer Probe bei Betrieb in Vorwärtsrichtung und bei Betrieb in Rückwärtsrichtung aufgenommen wird. Eine Kamera wird verwendet, um die Lumineszenz in einem Bereich der Nähe der Bandlücke des zu untersuchenden Materials aufzunehmen, um unter Verwendung der Emissionsfrequenz die Probenqualität und Verunreinigungen zu detektieren.

Aus der EP 2 463 672 A1 sind ein Verfahren und eine Vorrichtung zur Prüfung von Solarzellen bekannt, wobei durch die zu prüfende Solarzelle ein Strom in Vorwärtsrichtung geleitet wird und von der Solarzelle emittiertes Licht in zwei unterschiedlichen Wellenlängenbereichen von 800 bis 1300 Nanometer und von 1400 bis 1800 Nanometer detektiert wird und daraus Informationen über Defekte an der Solarzelle abgeleitet werden. Aus der EP 2 421 052 A2 sind ein weiteres Verfahren und eine weitereVorrichtung bekannt, wobei ein Wechselspannungssignal an beide Anschlüsse des Photovoltaikmoduls angelegt wird und die Modulation sowohl in der Vorwärtsrichtung als auch in der Rückwärtsrichtung des Photovoltaikmoduls durchgeführt und die sich ergebende Elektrolumineszenz ausgewertet wird. Dabei werden Lumineszenzbilder in der Vorwärtsrichtung und in der Rückwärtsrichtung erfasst und miteinander überlagert.

Das bekannte Verfahren wird zur Qualitätskontrolle bei der Herstellung von Photovoltaikmodulen verwendet. Es muss, wie alle derzeit bekannten Verfahren, die auf der Lumineszenz aufbauen, im Dunkelraum unter Ausschluss jeglicher Leuchtquellen, außer dem Photovoltaikmodul selbst, durchgeführt werden. Weiterhin kann es nicht bei Photovoltaikmodulen mit eingebauten Bypassdioden eingesetzt werden.

Aus J. Coello, "Introducing Electroluminescence Technique as a Quality Control of Large PV Plants" in "26th European Photovoltaic Solar Energy Conference and Exhibition", Seite 3469-3472, 2011, ist die Qualitätskontrolle bei der Herstellung von Photovoltaikmodulen in großem Maßstab durch Elektrolumineszenz bekannt. Hierbei werden die Photovoltaikzellen mittels Gleichspannung in der Vorwärtsrichtung beaufschlagt, so dass sie im nahen Infrarotbereich abstrahlen. Auch hierbei erfolgt die Durchführung des Tests in der Dunkelkammer, ohne Einstrahlung von Tageslicht.

Derartige Testverfahren sind zwar grundsätzlich geeignet, um bei der Herstellung von Photovoltaikzellen eine gute Qualitätskontrolle zu gewährleisten, jedoch setzt ein Einsatz an bereits bestehenden Photovoltaikmodulen voraus, dass das betreffende Modul ausgebaut und in der Dunkelkammer überprüft wird.

Dies bedeutet einen sehr hohen Aufwand und führt zu entsprechenden Verlusten während der Überprüfungsphase.

Vor diesem Hintergrund liegt der Erfindung die Aufgabe zugrunde, ein verbessertes Verfahren und eine verbesserte Vorrichtung zum Prüfen von Photovoltaikmodulen zu schaffen, womit eine vereinfachte Prüfung möglichst ohne Dunkelkammer durchgeführt werden kann.

Diese Aufgabe wird erfindungsgemäß durch ein Verfahren zum Prüfen von Photovoltaikmodulen gemäß Anspruch 1 gelöst.

Hinsichtlich der Vorrichtung wird die Aufgabe der Erfindung ferner durch eine Vorrichtung zur Prüfung eines Photovoltaikmoduls mit den Merkmalen des Anspruchs 10 gelöst.

Die Aufgabe der Erfindung wird auf diese Weise vollkommen gelöst.

Erfindungsgemäß wird eine selektive Auswertung der Elektrolumineszenz und eine Trennung von während des Betriebs des Photovoltaikmoduls vorhandenen Störquellen, wie beispielsweise Reflexionen der Sonne oder der Umgebung unter Zuhilfenahme des Filters ermöglicht, während die Leistung des Moduls moduliert wird.

Unter "Vorwärtsrichtung" wird im Zuge dieser Anmeldung derjenige Spannungsbereich verstanden, in dem die am Modul anliegende Spannung die gleiche Polarität hat, wie die am Modul unter Beleuchtung im Leerlauf abfallende Spannung.

Erfindungsgemäß ist der Kamera ein Filtersystem vorgeschaltet, das in dem Wellenlängenbereich durchlässig ist, in dem die Lumineszenzsignale des Photovoltaikmoduls liegen, etwa für Photovoltaikmodule aus kristallinem Silizium insbesondere im nahen Infrarotbereich (NIR) durchlässig, wozu etwa ein optisches Filter verwendet werden kann. Hierdurch ergibt sich eine optimale Empfindlichkeit im Wellenlängenbereich der Elektrolumineszenz und eine gute Trennung von den übrigen Störsignalen.

Erfindungsgemäß kann die Prüfung des Photovoltaikmoduls sogar unter Tageslicht oder anderer Bestrahlung, vorzugsweise sogar während des Betriebs des Photovoltaikmoduls, durchgeführt werden.

Gemäß der Erfindung wird das Kamerasignal mittels eines digitalen Filters nach dem Lock-in-Verfahren ausgewertet.

Im Zuge dieser Anmeldung wird unter einem "digitalen Filter" ein mathematisches Filter zur Manipulation eines Signals wie beispielsweise das Sperren oder Durchlassen eines bestimmten Frequenzbereiches verstanden. Digitale Filter verarbeiten keine kontinuierlichen Signale, sondern ausschließlich zeit- und wertdiskrete Signale. Ein zeitdiskretes Signal besteht in einer zeitlich periodischen Abfolge nur aus einzelnen Impulsen (hier Bildern), welche den Signalverlauf über die Zeit darstellen, den jeweiligen Abtastwerten (hier: die Helligkeitswerte der Bildpunkte). Die Abtastwerte sind wertdiskret, da die digitale Zahlendarstellung nur eine endliche Auflösung bietet.

Mittels eines digitalen Filters kann das Lumineszenzbild trotz starkem Hintergrundrauschen, wie es etwa im Tageslicht bei einem Photovoltaikmodul auftritt, sauber extrahiert und ausgewertet werden.

Die zusätzliche Vorschaltung eines (optischen) Filtersystems vor die Kamera ist nur dann sinnvoll, wenn keine breitbandige Störung gleichzeitig mit einem breitbandigen Nutzsignal vorliegt. Liegt jedoch (a) eine breitbandige Störung und ein schmalbandiges Nutzsignal (z.B. Tageslichtlumineszenz) vor, so kann bei korrekter Filterwahl der Signal/Rauschabstand (signal/noise ratio SNR) um den Faktor 10 bis 100 erhöht werden. Sind im Fall (b) der Spektralbereich von Störsignal und Nutzsignal völlig verschieden (z.B. Photolumineszenz in einer Dunkelkammer), so kann das SNR sogar um einen Faktor von $10^6$ oder mehr erhöht werden.

Da in aller Regel der Fall (a) vorliegt, ist die Vorschaltung eines optischen Filtersystems vor die Kamera zusätzlich zur Verwendung eines digitalen Filters sinnvoll.

Das Lock-in-Verfahren ist grundsätzlich im Stand der Technik bekannt und wird häufig verwendet, falls Signale verstärkt und vor dem Hintergrund von statistischem Rauschen ausgewertet werden müssen. Wie in O. Breitenstein, W. Warta, and M. Langenkamp, Lock-in Thermography. Basics and Use for Evaluating Electronic Devices and Materials, Online-Ausg. (Springer-Verlag Berlin Heidelberg, Berlin, Heidelberg, 2010) das hier vollständig durch Bezugnahme eingeschlossen wird, im Einzelnen beschrieben, setzt das Lock-in-Verfahren voraus, dass das Primärsignal vor der Detektion und vor der ersten Verstärkungsstufe periodisch gepulst oder in irgendeiner Weise mit einer bestimmten Frequenz, der "Lock-in-Frequenz" amplitudenmoduliert wird.

Das Ziel beim Lock-in-Verfahrens besteht darin, nur den oszillierenden Wechselspannungsteil des detektierten Signals auszuwerten. Bei der analogen Variante des Lock-in-Verfahrens wird ein rauschfreies AC-Referenzsignal vom Signalerzeugungsprozess abgeleitet und als phasenverschobenes Signal mit dem rauschbehafteten Messsignal unter Verwendung eines elektronischen Schalters abwechselnd entweder direkt überlagert oder mit dem invertierten rauschbehafteten Signal überlagert. Auf diese Weise kann das Signal weitgehend rauschfrei extrahiert werden. Es versteht sich, dass anstatt des vorstehend erwähnten analogen Lock-in-Verfahrens das Lock-in-Verfahren auch digital realisiert werden kann, wie im Einzelnen in O. Breitenstein et al., siehe oben, ausgeführt ist. Vorzugsweise handelt es sich bei dem Lock-in Verfahren also gleichfalls um ein digitales Filterverfahren.

Gemäß einer weiteren Ausgestaltung der Erfindung wird dem Photovoltaikmodul eine Modulationsfrequenz ($f_Q$) aufgeprägt, mit der periodisch zwischen mindestens zwei Arbeitspunkten (KS, LL, MPP, VR) gewechselt wird.

Hierbei können als Arbeitspunkte mindestens zwei verwendet werden, die aus der Gruppe ausgewählt werden, die aus Kurzschluss (KS), Leerlauf (LL), Punkt maximaler Leistung (MPP) oder einem beliebiger Punkt in Vorwärtsrichtung (VR) bestehen.

In bevorzugter Weiterbildung der Erfindung werden aus den Lumineszenzsignalen bei unterschiedlichen Arbeitspunkten (KS, LL, MPP, VR) Informationen durch Differenzbildung extrahiert.

Die Lumineszenzsignale bei den verschiedenen Arbeitspunkten enthalten unterschiedliche Informationen hinsichtlich der Lumineszenz, die erfindungsgemäß ausgewertet werden. In diesem Zusammenhang sind etwa die Kurzschlusslumineszenz (KL), Photolumineszenz (PL), widerstandsbegrenzte Elektrolumineszenz (EL) und Hintergrund (H) von Interesse.

So kann etwa die Photolumineszenz (PL) durch Subtraktion der Lumineszenzsignale im Leerlauf (LL) und bei Kurzschluss (KS) extrahiert werden: LL - KS = PL.

Hieraus ergibt sich die Leerlaufspannung der im Photovoltaikmodul verbauten Solarzellen. Auch können nicht kontaktierte (tote) Bereiche, Mikrorisse und potentialinduzierte Degradation (PID) festgestellt werden.

Ferner kann die widerstandsbegrenzte Elektrolumineszenz (EL) durch Subtraktion der Lumineszenzsignale in Vorwärtsrichtung (VR) und im Leerlauf (LL) extrahiert werden: EL = VR - LL.

Dies liefert Informationen bezüglich des lokalen Serienwiderstandes. Es lassen sich gut Bereiche erkennen, die elektrisch schlecht verbunden sind (unterbrochene Finger, schlechte Lötstellen und gebrochene Zellverbinder), sowie Mikrorisse und potentialinduzierte Degradation (PID).

Ferner kann ein gemischtes Lumineszenzsignal (EL + PL) durch Subtraktion der Lumineszenzsignale in Vorwärtsrichtung (VR) und im Kurzschluss (KS) extrahiert werden: EL + PL= VR - KS.

Dies liefert Hinweise über die allgemeine Qualität des Photovoltaikmoduls, insbesondere über Mikrorisse, potentialinduzierte Degradation. Der Vorteil eines hohen SNR kann ausgenutzt werden.

Die Kamera-Videofrequenz (framerate) $f_K$ ist nicht festgelegt, vielmehr ist Sie durch die heutige Technologie beschränkt. Zur Zeit beträgt das Maximum 400 Hz; ein rapider Anstieg ist aber in den nächsten Jahren zu erwarten.

Klassisch wird zur Signalverstärkung mittels Lock-in "oversampling" benutzt. Dabei gilt für die Modulationsfrequenz $f_Q$ bei einphasigem Lock-in $f_Q <= f_K/2$ und bei zweiphasigem Lock-in $f_Q <= f_K/4$. Das ist die sog. Nyquist-Bedingung. Es kann allerdings auch "undersampling" benutzt werden. Dabei ist $f_Q$ unabhängig von $f_K$. $f_Q$ kann sogar größer sein als $f_K$. Dabei sind aber einige Besonderheiten zu beachten, wie z.B. "verbotene" Frequenzen (vgl. auch O. Breitenstein et al., a.a.O). Die Modulationsfrequenz $f_Q$ muss nicht fest sein. Ist das Modulationssignal bekannt, z.B. durch Extraktion aus der Summe aller Pixel im Bild, so kann mittels asynchronem Lock-in das gewünschte Signal trotzdem verstärkt werden.

Durch die Verwendung des Lock-in-Verfahrens bei dem erfindungsgemäßen Verfahren lässt sich bereits ein sehr schwaches Elektrolumineszenzsignal von einem starken Hintergrundrauschen, wie es im Tageslicht bei einem Photovoltaikmodul auftritt, sauber trennen und auswerten, um ein Lumineszenzbild des Photovoltaikmoduls zu erzeugen.

Es versteht sich, dass an Stelle des Lock-in-Verfahrens auch jedes andere digitale oder analoge Filterverfahren verwendet werden kann, das geeignet ist, schwache periodische Signale zu detektieren.

Gemäß dem aus O. Breitenstein et al. bekannten Lock-in-Thermographieverfahren wird eine Solarzelle über eine externe Spannungsquelle oder Strahlungsquelle mit der Lock-in-Referenzfrequenz moduliert. Zur Auswertung wird eine im mittleren Infrarotbereich bei Wellenlängen zwischen 2 μm und 5 μm empfindliche Infrarotkamera benutzt. Die modulierte Spannungsquelle oder Strahlungsquelle und die Infrarotkamera sind dabei genauestens aufeinander synchronisiert, um aus den verrauschten Einzelbildern unter Verwendung des Lock-in-Verfahrens Wärmebildaufnahmen zu erzeugen, die die genaue Position und Stärke von Defekten in der Solarzelle anzeigen.

Erfindungsgemäß wird dagegen das Lock-in-Verfahren, oder ein anderes Verfahren, welches es erlaubt, schwache periodische Signale zu detektieren, verwendet, um Lumineszenzbilder aus verrauschten Bildern im Dunkeln, unter Tageslichteinstrahlung, oder anderer Bestrahlung auszuwerten bzw. zu erzeugen. Insoweit ist das im Stand der Technik aus O. Breitenstein et al. bekannte Thermographieverfahren nicht geeignet, den Erfindungsgegenstand nahezulegen.

Das periodische Signal kann entweder optisch (durch additive oder subtraktive (Zusatz-) Bestrahlung), mechanisch (z.B. durch Wackeln am Modul oder durch Chopper), elektrisch oder thermisch (periodisches Abkühlen oder Heizen) oder magnetisch erzeugt werden.

Gemäß einer weiter vorteilhaften Ausführung der Erfindung erfolgt die Prüfung bei angeschlossenem Verbraucher, vorzugsweise mit einem Wechselrichter.

Diese Ausführung ist besonders vorteilhaft in der Praxis einsetzbar, da das zu prüfende Photovoltaikmodul nicht ausgebaut werden muss, sondern während des Betriebes, gegebenenfalls unter Ausnutzung des Wechselrichters selbst, geprüft werden kann.

Gemäß einer weiter vorteilhaften Ausgestaltung der Erfindung wird die Modulationsfrequenz $f_Q$ durch periodisches Ein-/Ausschalten, vorzugsweise mittels eines Halbleiterschalters, erzeugt.

Dies ist eine besonders einfache Möglichkeit, um die Modulationsfrequenz $f_Q$ zu erzeugen.

Hierbei kann gegebenenfalls die Frequenz des Wechselrichters bei der MPP-Suche (Maximum-Power-Point-Suche) genutzt werden.

Gemäß einer weiteren Ausgestaltung der Erfindung wird der Wechselrichter über eine Schnittstelle angesteuert, um die angeschlossenen Module mit der Modulationsfrequenz $f_Q$ zu modulieren.

Da neuere Wechselrichter üblicherweise mit einer Schnittstelle zur Ansteuerung ausgestattet sind, kann auf diese Weise eine besonders einfache Aufmodulation des Wechselspannungssignals auf das Photovoltaikmodul bzw. auf eine Folge von Photovoltaikmodulen in einem Strang eines Wechselrichters erzeugt werden.

Gemäß einer weiteren Ausgestaltung der Erfindung wird das Photovoltaikmodul vorzugsweise über einen Halbleiterschalter periodisch kurzgeschlossen.

Auch dieses Verfahren ermöglicht eine einfache Erzeugung der Modulationsfrequenz.

Gemäß einer weiteren Ausgestaltung der Erfindung wird das zu prüfende Photovoltaikmodul durch periodische Modulation der Bestrahlung auf demselben oder einem im gleichen Strang oder am selben Wechselrichter angeschlossenen Modul oder Teile hiervon mit der Modulationsfrequenz $f_Q$ moduliert.

Dieses Verfahren kann z.B. durch gezielte periodische Abschattung z.B. mittels eines Choppers mit der Modulationsfrequenz $f_Q$ realisiert werden.

Im Rahmen dieser Anmeldung ist unter Bestrahlung jegliche Art von elektromagnetischer Strahlung eingeschlossen: von Röntgenstrahlung über UV, sichtbares Licht, nahes, mittleres, fernes Infrarot bis hin in den Mikrowellenbereich.

Bei Verwendung einer Kamera mit 50 Hz Bildfrequenz ergaben sich gute Ergebnisse mit einer Modulationsfrequenz im Bereich von etwa 1 bis < 25 Hz, etwa im Bereich von 2 bis 10 Hz oder vorzugsweise im Bereich von 3 bis 7 Hz.

Das Filtersystem filtert das relativ schwache Elektrolumineszenzsignal, das (bei Photovoltaikmodulen aus kristallinem Silizium) im nahen Infrarotbereich liegt, nämlich etwa im Bereich von 950 bis 1330 nm, mit einem Maximum bei 1130 nm, aus dem Hintergrundrauschen heraus und ermöglicht so eine bessere nachfolgende Verstärkung mit dem Lock-in-Verfahren. Üblicherweise verwendete CCD-Kameras haben eine relativ geringe Empfindlichkeit im NIR-Bereich und eine größere Empfindlichkeit im optisch sichtbaren Bereich.

Diese Nachteile werden zusätzlich zur Filterung durch den Einsatz einer auf das Lumineszenzspektrum des Moduls angepassten Kamera ausgeglichen, die z.B. für Module aus kristallinem Silizium eine hohe Empfindlichkeit im Wellenlängenbereich von 950 bis 1350 nm aufweist.

Cadmiumtellurid-Dünnschichtmodule (CdTe) leuchten im Bereich von 700 - 900 nm. Hier bietet sich die Verwendung einer SiCCD Kamera mit angepasstem optischem Filtersystem an.

CIGS- (auch CIGSSe- oder CIS-) Dünnschichtmodule leuchten je nach Schichtaufbau im Bereich zwischen 800 - 1300 nm. Hier bietet sich die Verwendung einer SiCCD-Kamera mit angepasstem optischem Filtersystem an.

Für alle am Markt existierenden Modultechnologien eignet sich eine InGaAs-Kamera mit einem zu niedrigeren Wellenlängen hin erweiterten Spektralbereich (400 -1700 nm). Das optische Filtersystem sollte entsprechend angepasst sein.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:

Fig. 1     eine stark vereinfachte Übersicht über eine erfindungsgemäße Vorrichtung zur Prüfung eines Photovoltaikmoduls;

Fig. 2     eine Prinzipdarstellung des Modulationsverfahrens zur Prüfung von Photovoltaikmodulen bei einer Photovoltaikanlage;

Fig. 3     eine vereinfachte schematische Darstellung der spektralen Empfindlichkeit des Filtersystems für das Lumineszenzsignal von Solarmodulen aus kristallinen Silizium, das ein Maximum im Bereich von etwa 1130 nm hat und im Vergleich dazu des Hintergrundrauschens;

Fig. 4     eine weitere Prinzipdarstellung einer erfindungsgemäßen Vorrichtung, wobei die Modulationsfrequenz durch eine Quelle im Stromkreis des Photovoltaikmoduls erzeugt wird, wodurch ein Wechselspannungssignal aufgeprägt wird;

Fig. 5     eine alternative Ausführung der Erfindung, bei der die Modulationsfrequenz als sinusförmiges Signal ausgebildet ist, mit dem etwa die Ausgangsleistung eines Photovoltaikmoduls moduliert wird;

Fig. 6     eine vereinfachte Darstellung einer Photovoltaikanlage mit einer Folge von in Reihe geschalteten Photovoltaikmodulen in einem Strang eines Wechselrichters, mit verschiedenen Möglichkeiten zur Erzeugung der Modulationsfrequenz und

Fig. 7     eine Strom-/Spannungskennlinie eines Photovoltaikmoduls, bei der die verschiedenen Arbeitspunkte erläutert sind.

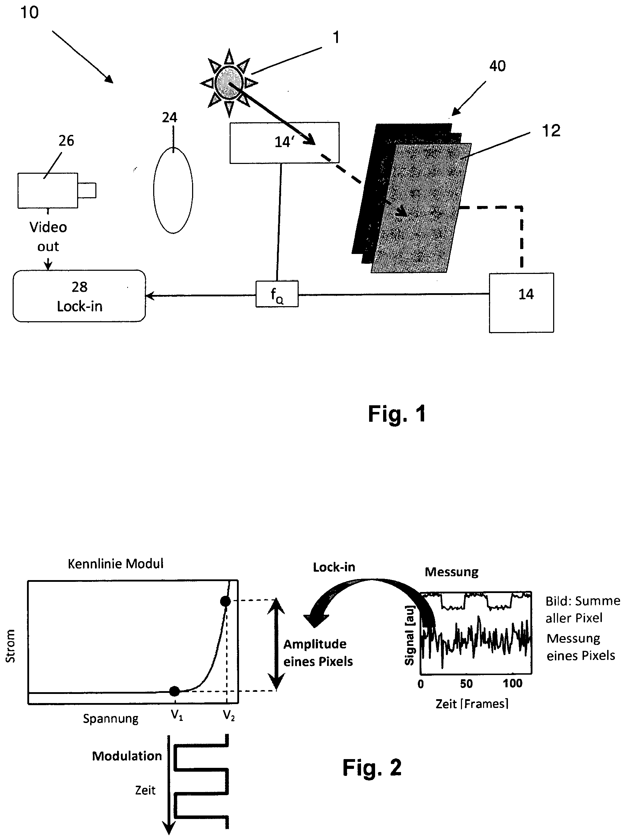

Fig. 1 zeigt eine vereinfachte Darstellung einer Vorrichtung 10 zur Prüfung eines Photovoltaikmodulen 12 einer Photovoltaikanlage 40. Die Photovoltaikanlage 40 weist eine Folge von Photovoltaikmodulen auf, die hier nur beispielhaft mit 12 angedeutet sind.

Die Leistung der Photovoltaikanlage 40 wird mittels mindestens einer Modulationsfrequenz $f_Q$ moduliert, wie schematisch mit einer Quelle 14 oder alternativ mit einer Quelle 14' dargestellt ist. Die Modulation kann beispielsweise elektrisch, mechanisch oder magnetisch erfolgen, um die von den Photovoltaikmodulen 12 abgegebene Leistung im Betrieb mit der Modulationsfrequenz $f_Q$ zu modulieren, wie bei 14 dargestellt ist. Alternativ könnte z.B. die auf die Photovoltaikmodule 12 einfallende Strahlung von der Sonne 1 moduliert werden, indem etwa durch einen Chopper eine periodische Beschattung erzeugt wird, wie bei 14' gezeigt ist.

Die von den Photovoltaikmodule 12 abgegebene Leistung, die mit der Modulationsfrequenz $f_Q$ moduliert ist, wird über eine Videokamera 26 gescannt. Das Ausgangssignal der Videokamera 26 "Video out" wird mittels einer Auswerteeinrichtung 28 (in der Regel ein PC) mittels eines Lock-in-Algorithmus analysiert, um daraus Lumineszenzbilder der Photovoltaikmodule 12 abzuleiten.

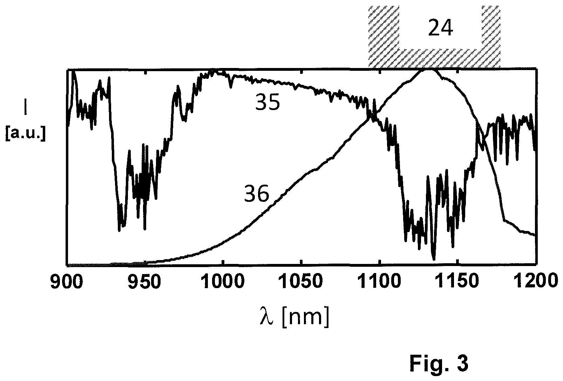

In Fig. 2 ist die Modulation schematisch dargestellt. Eine Modulkennlinie wird beispielsweise mit einem Rechtecksignal moduliert, wie in der linken Bildhälfte gezeigt ist. Mittels der Kamera 26 werden die einzelnen Pixel ausgemessen, wie in der rechten Bildhälfte dargestellt ist. Aus der Summe aller Pixel im Bild lässt sich die Modulationsfrequenz bestimmen. Aus dem verrauschten Signal eines jeden Pixels wird ein Lumineszenzbild des Photovoltaikmoduls mittels des digitalen Filters in Form des Lock-in-Algorithmus abgeleitet. Fig. 3 zeigt eine schematische Darstellung des Hintergrundsignals (Intensität I in arbiträren Einheiten a.u.), das mit 35 bezeichnet ist, des Lumineszenzsignals, das mit 36 bezeichnet ist und des verwendeten Filtersystems 24, das überwiegend im Bereich von 950 bis 1350 nm empfindlich ist, um die Empfindlichkeit in den Bereich des Maximums des Lumineszenzsignals zu legen, das für Photovoltaikmodule aus kristallinem Silizium bei 1130 Nanometer liegt. Für andere Modultechnologien (z. B. Dünnschichtmodule) kann das Messsystem entsprechend angepasst sein.

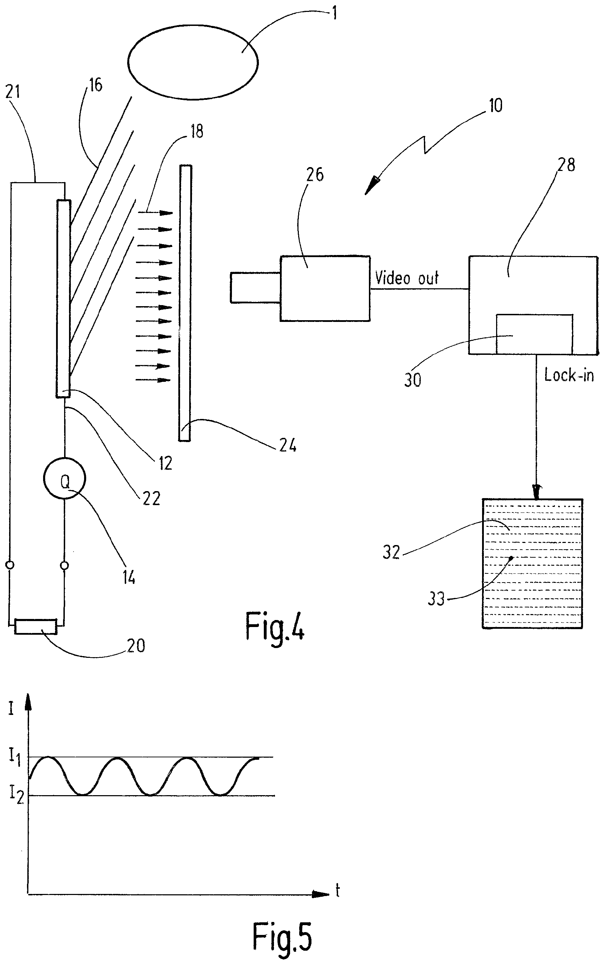

Fig. 4 zeigt eine weitere Darstellung einer Vorrichtung 10 zur Prüfung eines Photovoltaikmoduls 12.

Das Photovoltaikmodul 12 weist zwei Anschlüsse 21, 22 auf, über die es bei Anschluss einer externen Last 20 einen geschlossenen Stromkreis bildet. In diesem Stromkreis liegt ferner noch eine Quelle 14 zur Erzeugung eines periodischen Signals, das überlagert wird.

Erfindungsgemäß wird mittels der Quelle 14 ein periodisches Wechselspannungssignal erzeugt, dessen Amplitude so gewählt ist, dass das Photovoltaikmodul 12 immer in seiner Vorwärtsrichtung betrieben wird. Es kann sich beispielsweise um ein sinusförmiges Signal handeln, dessen Amplitude geringer als die Amplitude des DC-Signals ist, das durch die Bestrahlung des Photovoltaikmoduls 12 mittels Sonnenstrahlen 16 ausgehend von einer schematisch dargestellten Sonne 1 erzeugt wird. Es ergäbe sich dann ein pulsierendes Signal, dessen Amplitude zwischen $I_1$ und $I_2$ pulsiert, wie in Fig. 5 schematisch angedeutet ist.

Die vom Photovoltaikmodul 12 beim Betrieb in seiner Vorwärtsrichtung erzeugte lumineszierende Strahlung 18 wird über das Filtersystem 24, das beispielsweise im Bereich von 950 bis 1350 nm mit einem Maximum im Bereich von 1130 nm arbeitet, ausgefiltert, um das Lumineszenzsignal aus dem Hintergrundrauschen des Sonnenspektrums 35 gemäß Fig. 3 zu extrahieren. Die Kamera 26 erhält das über das Filtersystem 24 gefilterte Signal und scannt die Oberfläche des Photovoltaikmoduls 12 ab. Die Bildfrequenz der Kamera 26 kann beispielsweise bei 50 Hz liegen ($f_K$ = 50 Hz). Als Modulationsfrequenz $f_Q$ könnte zum Beispiel eine Frequenz von 5 Hz verwendet werden.

Das Ausgangssignal "Video out" der Kamera 26 wird der Auswerteeinrichtung 28, zum Beispiel einem PC, zur Auswertung zugeführt. Die Auswerteeinrichtung 28 verwendet einen digitalen Lock-in-Algorithmus, um aus dem verrauschten Videosignal das Elektrolumineszenzsignal zu extrahieren und zu verstärken und um daraus ein Lumineszenzbild 32 des Photovoltaikmoduls 12 zu erzeugen. Das Lumineszenzbild 32 kann dann verwendet werden, um Defekte des Photovoltaikmoduls 12 optisch sichtbar zu machen bzw. um solche Defekte automatisch auszuwerten.

Wie oben bereits ausgeführt wurde, versteht es sich, dass das Anregungssignal in beliebiger Weise erzeugt werden kann, soweit beachtet wird, dass das Photovoltaikmodul 12 immer nur in Vorwärtsrichtung betrieben wird. Weiterhin sind neben rechteckigen oder sinusförmigen Anregungssignalen auch jegliche andere periodische Modulationssignale denkbar.

Wie vorstehend bereits erwähnt, könnte zum Beispiel statt eines sinusförmigen Signals gemäß Fig. 5 auch ein Rechtecksignal gemäß Fig. 2 verwendet werden. Ein solches Rechtecksignal kann in einfacher Weise zum Beispiel dadurch erzeugt werden, dass in dem über die Last 20 geschlossenen Stromkreis des Photovoltaikmoduls 12 ein Schalter aufgenommen wird, über den der Stromkreis periodisch geöffnet oder geschlossen wird. In diesem Fall würde es sich bei der Quelle 14 gemäß Fig. 4 um einen Halbleiterschalter handeln. Alternativ könnte zum Beispiel auch das Photovoltaikmodul 12 über einen Halbleiterschalter periodisch kurzgeschlossen werden.

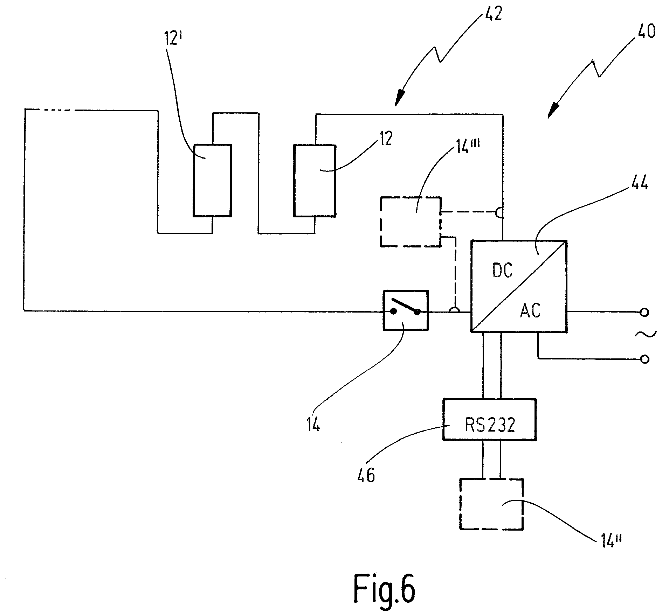

Einige Varianten für die Erzeugung des Anregungssignals in Verbindung mit einem Wechselrichter sind anhand einer beispielhaften Photovoltaikanlage 40 in Fig. 6 dargestellt.

Im vorliegenden Fall sind eine Reihe von Photovoltaikmodulen 12, 12'... in Serie verschaltet und bilden einen Strang 42, der an einem Wechselrichter 44 angeschlossen ist. Es versteht sich, dass die Photovoltaikanlage 40 in der Regel eine Mehrzahl von Strängen aufweist, die der Einfachheit halber hier jedoch nicht dargestellt sind.

Im Strang 42 liegt im vorliegenden Fall ein Halbleiterschalter 14 in Serie mit dem Photovoltaikmodulen 12, 12'. Durch den Halbleiterschalter 14 kann somit der Strangstrom periodisch unterbrochen werden, so dass sich die Situation gemäß Fig. 2 ergibt.

Alternativ könnte auch an die beiden Eingangsseiten des Wechselrichters 44 eine Quelle 14''' etwa über eine Stromzange für die Zeit eines Prüfzyklus angeschlossen werden und ein Signal aufmoduliert werden, das beispielsweise eine zusätzliche periodische Last erzeugt.

Als weitere Möglichkeit in Fig. 6 ist die Verwendung einer Schnittstelle 46 des Wechselrichters 44 dargestellt, die über eine Quelle 14'' angesteuert werden könnte, um ein geeignetes Signal auf den Eingangskreis des Wechselrichters 44 aufzumodulieren.

Eine weitere Möglichkeit zur Modulation in Fig. 6 ist die periodische Abschattung eines Teils der Photovoltaikanlage oder eines Photovoltaikmoduls zur Erzeugung einer Anregung, wie in Fig. 1 bei 14' angedeutet.

Beliebige weitere Möglichkeiten sind denkbar.

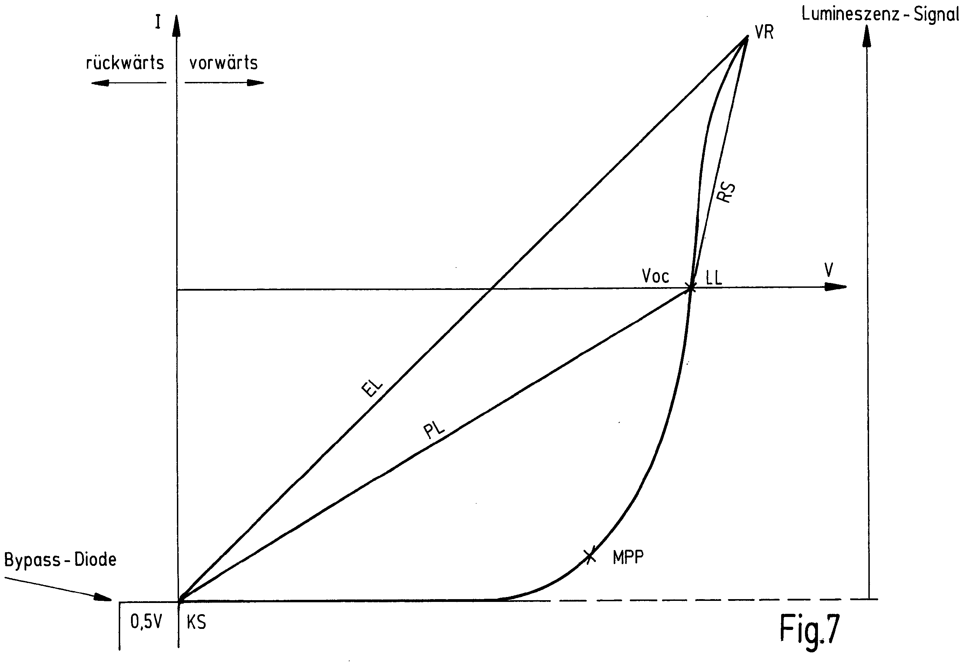

In Fig. 7 ist die Strom-/Spannungskennlinie eines Photovoltaikmoduls schematisch dargestellt. Als verschiedene Arbeitspunkte sind insbesondere der Kurzschluss KS, der Leerlauf LL und der Betrieb in Vorwärtsrichtung VR angegeben. Wegen der Bypass-Diode ergibt sich am linken unteren Ende der Abfall nach Überwindung der Schwellspannung von >0,5 Volt. Die Leerlaufspannung beträgt etwa 36 bis 45 Volt.

Im Kurzschlussfall werden intakten Kontakten beinahe alle Überschussladungsträger abgesaugt. Deshalb ist das Lumineszenzsignal, das auf der rechten Skala abzulesen ist, beinahe null. Im Leerlauffall LL ergibt sich ausschließlich Photolumineszenz PL, da nur eine Anregung durch Licht erfolgt.

Beim Betrieb in Vorwärtsrichtung VR ist VR = PL + EL, wobei in gut bestromten Bereichen EL >> PL ist. Somit bestimmt der Serienwiderstand maßgeblich die Differenz zwischen VR und LL.

Weiter unten auf der Kennlinie ist der Punkt maximaler Leistungsabgabe mit MPP bezeichnet.

Bei der Modulation des Photovoltaikmoduls mit der Modulationsfrequenz $f_Q$ wird eine periodische Veränderung durch ein Wechseln zwischen mindestens zwei Arbeitspunkten vorgenommen. Die an den verschiedenen Arbeitspunkten erzeugten Lumineszenzsignale enthalten unterschiedliche Informationen. Mögliche Arbeitspunkte sind: der Kurzschluss (KS), der Leerlauf (LL), ein beliebiger Punkt in Vorwärtsrichtung (VR) und der Punkt maximaler Leitung (MPP).

Im Kurzschlussfall KS werden praktisch alle Ladungsträger abgesaugt, so dass die Lumineszenz im Kurzschlussfall KL≈ 0. Im Kurzschluss besteht das Bild eines Photovoltaikmoduls folglich nur noch aus der Hintergrundstrahlung H: KS ≈ H da KL ≈ 0.

Im Leerlauf LL besteht das Bild eines Photovoltaikmoduls aus der Photolumineszenz PL und dem Hintergrund H: LL ≈ PL + H.

In der Vorwärtsrichtung VR ist das Modul als Verbraucher geschaltet. Das Bild eines Photovoltaikmoduls besteht aus Elektrolumineszenz (EL), Photolumineszenz (PL) und dem Hintergrund (H). Es ergibt sich VR ≈ EL + PL + H.

Beim Wechsel zwischen verschiedenen Arbeitspunkten können folgende Änderungen detektiert werden:

a) Die Photolumineszenz PL ergibt aus der Differenz der Lumineszenzsignale im Leerlauf LL und im Kurzschluss KS: PL = LL - KS.

Information eines Photolumineszenzbildes ist die Leerlaufspannung der im Photovoltaikmodul verbauten Solarzellen.

Es können auch nicht kontaktierte (tote) Bereiche festgestellt werden. Denn ein Arbeitspunktwechsel findet nur in kontaktierten Bereichen statt: Bereiche, in den keine Änderung stattfindet, sind also nicht elektrisch verbunden. Ferner können Mikrorisse und potentialinduzierte Degradation (PID) festgestellt werden.

b) Aus der Differenz zwischen der Lumineszenz in Vorwärtsrichtung VR und der Lumineszenz im Leerlauf LL ergibt sich die strominduzierte Elektrolumineszenz EL = VR - LL.

Information ist der lokale Serienwiderstand RS. Bereiche mit hohem Serienwiderstand werden weniger stromdurchflossen, also werden geringere Änderungen detektiert.

Es lassen sich gut Bereiche erkennen, die elektrisch schlecht verbunden sind, wie etwa unterbrochene Finger, schlechte Lötstellen und gebrochene Zellverbinder. Auch können Mikrorisse und potentialinduzierte Degradation erkannt werden.

c) Aus der Differenz zwischen der Lumineszenz in Vorwärtsrichtung VR und der Lumineszenz im Kurzschluss KS ergibt sich die allgemeine Lumineszenz: PL + EL = VR - KS.

Dies ermöglicht eine Beurteilung der allgemeinen Qualität des Photovoltaikmoduls, insbesondere die Feststellung von Mikrorissen, der potentialinduzierten Degradation mit einem besonders hohen SNR.

**Patentansprüche**

1. Verfahren zum Prüfen von Photovoltaikmodulen, mit den folgenden Schritten:

   - Modulieren einer von einem Photovoltaikmodul (12) aufgenommenen oder abgegebenen Leistung mit wenigstens einer Modulationsfrequenz ($f_Q$);
   - Scannen des Photovoltaikmoduls (12) mit einer Kamera (26) und
   - Auswerten des von der Kamera (26) erzeugten Kamerasignals unter Verwendung eines Filters (24);

   wobei

   - das Photovoltaikmodul (12) nur in seiner Vorwärtsrichtung betrieben wird

   **dadurch gekennzeichnet, dass** der Kamera (26) ein Filtersystem (24) vorgeschaltet ist, das in dem Wellenlängenbereich durchlässig ist, in dem die Lumineszenzsignale des Photovoltaikmoduls (12) liegen, und dass die Auswertung des Kamerasignals nach dem Lock-in-Verfahren erfolgt, um ein Lumineszenzbild (32) des Photovoltaikmoduls zu erhalten.

2. Verfahren nach Anspruch 1, **dadurch gekennzeichnet, dass** die Prüfung auch unter Tageslicht, vorzugsweise während des Betriebs des Photovoltaikmoduls (12), erfolgt.

3. Verfahren nach einem der vorhergehenden Ansprüche, **dadurch gekennzeichnet, dass** dem Photovoltaikmodul eine Modulationsfrequenz ($f_Q$) aufgeprägt wird, mit der periodisch zwischen mindestens zwei Arbeitspunkten (KS, LL, MPP, VR) gewechselt wird.

4. Verfahren nach Anspruch 3, **dadurch gekennzeichnet, dass** als Arbeitspunkte mindestens zwei verwendet werden, die aus der Gruppe ausgewählt werden, die aus Kurzschluss (KS), Leerlauf (LL), Punkt maximaler Leistung (MPP) und einem beliebigen Punkt in Vorwärtsrichtung (VR) besteht, wobei bevorzugt aus den Lumineszenzsignalen bei unterschiedlichen Arbeitspunkten (KS, LL, MPP, VR) Informationen durch Differenzbildung extrahiert werden.

5. Verfahren nach einem der Ansprüche 3 bis 4, **dadurch gekennzeichnet, dass** die Photolumineszenz (PL) durch Subtraktion der Lumineszenzsignale im Leerlauf (LL) und bei Kurzschluss (KS) extrahiert wird: LL - KS = PL, oder dass die strominduzierte Elektrolumineszenz (EL) durch Subtraktion der Lumineszenzsignale in Vorwärtsrichtung (VR) und im Leerlauf (LL) extrahiert wird: EL = VR - LL, oder dass die allgemeine Elektrolumineszenz (EL+PL) durch Subtraktion der Lumineszenzsignale in Vorwärtsrichtung (VR) und im Kurzschluss (KS) extrahiert wird:

$$EL + PL = VR - KS.$$

6. Verfahren nach einem der vorhergehenden Ansprüche, **dadurch gekennzeichnet, dass** die Prüfung mit einem angeschlossenen Verbraucher (20), vorzugsweise mit einem Wechselrichter (44), erfolgt, wobei vorzugsweise die Modulationsfrequenz ($f_Q$) durch periodisches Ein-/Ausschalten, vorzugsweise mittels eines Halbleiterschalters (14'), erzeugt wird oder wobei vorzugsweise die Frequenz des Wechselrichters (44) bei der MPP-Suche als Modulationsfrequenz ($f_Q$) genutzt wird.

7. Verfahren nach Anspruch 6, **dadurch gekennzeichnet, dass** der Wechselrichter (44) über eine Schnittstelle (46) mit der Modulationsfrequenz ($f_Q$) angesteuert wird oder bei dem das Photovoltaikmodul (12) vorzugsweise über einen Halbleiterschalter (14''') periodisch kurzgeschlossen wird.

8. Verfahren nach einem der vorhergehenden Ansprüche, **dadurch gekennzeichnet, dass** das Photovoltaikmodul durch periodische Modulation der Bestrahlung in einem Teil der Photovoltaikanlage mit der Modulationsfrequenz ($f_Q$) angesteuert wird, wobei vorzugsweise die periodische Modulation der vom Modul aufgenommenen oder abgegebenen Leistung optisch erzeugt wird, insbesondere durch additive oder subtraktive Zusatzbestrahlung.

9. Verfahren nach einem der vorhergehenden Ansprüche, **dadurch gekennzeichnet, dass** die periodische Modulation der vom Modul aufgenommenen oder abgegebenen Leistung mechanisch erzeugt wird, insbesondere durch Wackeln am Modul oder durch Chopper oder bei dem die periodische Modulation der vom Modul aufgenommenen oder abgegebenen Leistung elektrisch, thermisch oder magnetisch erzeugt wird, insbesondere durch periodisches Abkühlen oder Heizen.

10. Vorrichtung zur Prüfung eines Photovoltaikmoduls (12), mit einer Einrichtung (14) zum Aufmodulieren eines Wechselspannungssignals mit mindestens einer Modulationsfrequenz ($f_Q$) auf die vom Photovoltaikmodul (12) aufgenommene oder abgegebene Leistung, mit einer Kamera (26) zum Scannen des Photovoltaikmoduls (12), die ein Kamerasignal ausgibt, und mit einer Auswerteeinrichtung (28), die eine Schaltung (30) zur Auswertung des Kamerasignals nach dem Lock-in-Verfahren aufweist, wobei das Photovoltaikmodul (12) nur in der Vorwärtsrichtung betrieben ist, **dadurch gekennzeichnet, dass** der Kamera ein Filtersystem (24) vorgeschaltet ist, das in dem Wellenlängenbereich durchlässig ist, in dem die Lumineszenzsignale des Photovoltaikmoduls (12) liegen, und dass die Schaltung (30) zur Berechnung eines Lumineszenzbildes ausgebildet ist.

11. Vorrichtung nach Anspruch 10, **dadurch gekennzeichnet, dass** in einem Stromkreis des Photovoltaikmoduls (12) ein Schalter (14'), vorzugsweise eines Halbleiterschalter, liegt, der den Stromkreis mit der Modulationsfrequenz ($f_Q$) periodisch unterbricht.

12. Vorrichtung nach einem der Ansprüche 10 bis 11, **dadurch gekennzeichnet, dass** an das Photovoltaikmodul (12) ein Schalter (14'''), vorzugsweise eines Halbleiterschalter, angeschlossen ist, der das Photovoltaikmodul (12) mit der mindestens einen Modulationsfrequenz ($f_Q$) periodisch kurzschließt.

13. Vorrichtung nach einem der Ansprüche 10 bis 12, **dadurch gekennzeichnet, dass** das Photovoltaikmodul (12) an einen Wechselrichter (44) angeschlossen ist, der über eine Schnittstelle (46) mit der mindestens einen Modulationsfrequenz ($f_Q$) angesteuert wird, wobei vorzugsweise das Photovoltaikmodul (12) durch periodische Modulation des eingestrahlten Lichtes mit der mindestens einen Modulationsfrequenz ($f_Q$) angesteuert wird, wobei weiter bevorzugt die periodische Modulation der vom Photovoltaikmodul aufgenommenen oder abgegebenen Leistung mit der mindestens einen Modulationsfrequenz ($f_Q$) optisch erzeugt wird, insbesondere durch additive oder subtraktive Zusatzbestrahlung.

**14.** Vorrichtung nach einem der Ansprüche 10 bis 13, **dadurch gekennzeichnet, dass** die periodische Modulation der vom Photovoltaikmodul aufgenommenen oder abgegebenen Leistung mit der mindestens einen Modulationsfrequenz ($f_Q$) mechanisch erzeugt wird, insbesondere durch Wackeln am Photovoltaikmodul oder durch Chopper oder bei der die periodische Modulation der vom Photovoltaikmodul aufgenommenen oder abgegebenen Leistung mit der mindestens einen Modulationsfrequenz ($f_Q$) elektrisch, thermisch oder magnetisch erzeugt wird, insbesondere durch periodisches Abkühlen oder Heizen.

**15.** Vorrichtung nach einem der Ansprüche 10 bis 14, **dadurch gekennzeichnet, dass** die Modulationsfrequenz ($f_Q$) im Bereich von 1 bis 25 Hz, vorzugsweise von 2 bis 10 Hz, weiter bevorzugt von 3 bis 7 Hz, liegt.

**Claims**

**1.** A method for testing photovoltaic modules, comprising the following steps:

- modulating a power drawn from or output by a photovoltaic module (12) using at least one modulation frequency ($f_Q$);
- scanning the photovoltaic module (12) using a camera (26), and
- evaluating the camera signal produced by the camera (26) using a filter (24);

wherein

- the photovoltaic module (12) is operated only in its forward direction,

**characterized in that** before the camera (26) there is placed a filter system (24) that is transmissive in the wavelength range that contains the luminescence signals from the photovoltaic module (12), and **in that** the camera signal is evaluated using the lock-in method for obtaining a luminescence image (32) of the photovoltaic module.

**2.** The method according to claim 1, **characterized in that** the test is also performed under daylight, preferably during operation of the photovoltaic module (12).

**3.** The method according to any of the preceding claims, **characterized in that** a modulation frequency ($f_Q$) is applied onto the photovoltaic module, wherein the modulation frequency changes periodically between at least two operating points (KS, LL, MPP, VR).

**4.** The method according to claim 3, **characterized in that** the operating points used are at least two that are selected from the group that consists of short circuit (KS), no load (LL), maximum power point (MPP) and any point in the forward direction (VR), wherein preferably information is extracted from the luminescence signals at different operating points (KS, LL, MPP, VR) by extracting a difference.

**5.** The method according to one of claims 3 to 4, **characterized in that** the photoluminescence (PL) is extracted by subtracting the luminescence signals at no load (LL) and under short circuit (KS): LL - KS = PL, or that the current-induced electroluminescence (EL) is extracted by subtracting the luminescence signals in the forward direction (VR) and at no load (LL): EL = VR - LL, or that the general electroluminescence (EL + PL) is extracted by subtracting the luminescence signals in the forward direction (VR) and under short circuit (KS): EL + PL = VR - KS.

**6.** The method according to any of the preceding claims, **characterized in that** the test is performed using a connected load (20), preferably using an inverter (44), wherein preferably the modulation frequency ($f_Q$) is produced by periodic switching on/off, preferably by means of a semiconductor switch (14'), or wherein preferably the frequency of the inverter (44) is used as modulation frequency ($f_Q$) for the MPP search.

**7.** The method according to claim 6, **characterized in that** the inverter (44) is actuated via an interface (46) using the modulation frequency ($f_Q$), or wherein preferably the photovoltaic module (12) is periodically shorted, preferably via a semiconductor switch (14''').

**8.** The method according to any of the preceding claims, **characterized in that** the photovoltaic module is driven by periodic modulation of the irradiation in a portion of the photovoltaic installation using the modulation frequency ($f_Q$), wherein preferably the periodic modulation of the power drawn or output by the module is produced optically, particularly by additive or subtractive supplementary irradiation.

**9.** The method according to any of the preceding claims, **characterized in that** the periodic modulation of the power drawn or output by the module is produced mechanically, particularly by shaking the module, or by chopper, or wherein the periodic modulation of the power drawn or output by the module is produced electrically, thermally or magnetically, particularly by periodic cooling or heating.

**10.** An apparatus for testing a photovoltaic module (12), comprising a device (14) for modulating an AC voltage signal onto the power drawn or output by the photovoltaic module (12) using at least one modulation frequency ($f_Q$), comprising a camera (26) for scanning the photovoltaic module (12), which camera outputs a camera signal, and comprising an evaluation device (28) comprising a circuit (30) for evaluating the camera signal according to the lock-in method, wherein the photovoltaic module (12) is operated only in the forward direction, **characterized in that** before the camera there is placed a filter system (24) that is transmissive in the wavelength range that contains the luminescence signals from the photovoltaic module (12), and **in that** the circuit (30) is configured for computing a luminescence image.

11. The apparatus according to claim 10, **characterized in that** a circuit of the photovoltaic module (12) contains a switch (14'), preferably a semiconductor switch, that periodically interrupts the circuit using the modulation frequency ($f_Q$).

12. The apparatus according to one of claims 10 to 11, **characterized in that** a switch (14'''), preferably a semiconductor switch, is connected to the photovoltaic module (12), which switch periodically shorts the photovoltaic module (12) using the at least one modulation frequency ($f_Q$).

13. The apparatus according to any of claims 10 to 12, **characterized in that** the photovoltaic module (12) is connected to an inverter (44) that is driven via an interface (46) using the at least one modulation frequency ($f_Q$), wherein preferably the photovoltaic module (12) is driven by periodic modulation of the light that is present using the at least one modulation frequency ($f_Q$), wherein further preferably the photovoltaic module is driven optically by a periodic modulation of the power drawn or output using the at least one modulation frequency ($f_Q$), particularly by additive or subtractive supplementary irradiation.

14. The apparatus according to any of claims 10 to 13, **characterized in that** the periodic modulation of the power drawn or output by the photovoltaic module using the at least one modulation frequency ($f_Q$) is produced mechanically, particularly by shaking the photovoltaic module, or by chopper, or wherein the periodic modulation of the power drawn or output by the photovoltaic module using the at least one modulation frequency ($f_Q$) is produced electrically, thermally or magnetically, particularly by periodic cooling or heating.

15. The apparatus according to any of claims 10 to 14, **characterized in that** the modulation frequency ($f_Q$) is in the range from 1 to 25 Hz, preferably from 2 to 10 Hz, more preferably from 3 to 7 Hz.

**Revendications**

1. Procédé destiné à tester des modules photovoltaïques, avec les étapes suivantes :

   - modulation d'une puissance absorbée ou délivrée par un module photovoltaïque (12) avec au moins une fréquence de modulation ($f_Q$) ;
   - scannage du module photovoltaïque (12) avec une caméra (26) et
   - analyse du signal de caméra produit par la caméra (26) avec utilisation d'un filtre (24) ;
   - le module photovoltaïque (12) n'étant mis en oeuvre que dans sa direction vers l'avant,

   **caractérisé en ce qu'**un équipement de filtre (24) est monté en amont de la caméra (26) et est perméable dans la plage de longueur d'onde dans laquelle se situent les signaux luminescents du module photovoltaïque (12), et **en ce que** l'analyse du signal de caméra s'effectue selon le procédé lock-in pour obtenir une image luminescente (32) du module photovoltaïque.

2. Procédé selon la revendication 1, **caractérisé en ce que** le test s'effectue également sous une lumière naturelle, de préférence pendant le fonctionnement du module photovoltaïque (12).

3. Procédé selon l'une des revendications précédentes, **caractérisé en ce que** le module photovoltaïque est exposé à une fréquence de modulation ($f_Q$) avec laquelle un changement entre au moins deux points de travail (KS, LL, MPP, VR) est effectué périodiquement.

4. Procédé selon la revendication 3, **caractérisé en ce que**, en tant que points de travail, il en est utilisé au moins deux qui sont sélectionnés dans le groupe se composant d'un court-circuit (KS), d'une marche à vide (LL), d'un point de puissance maximale (MPP) et d'un point quelconque dans la direction vers l'avant (VR), des informations étant de préférence extraites par formation de la différence à partir des signaux luminescents pour différents points de travail (KS, LL, MPP, VR).

5. Procédé selon l'une des revendications 3 à 4, **caractérisé en ce que** la photoluminescence (PL) est extraite par soustraction des signaux luminescents dans la marche à vide (LL) et en cas de court-circuit (KS) : LL - KS = PL, ou **en ce que** l'électroluminescence (EL) induite par le courant est extraite par soustraction des signaux luminescents dans la direction vers l'avant (VR) et dans la marche à vide (LL) : EL = VR - LL, ou **en ce que** l'électroluminescence générale (EL + PL) est extraite par soustraction des signaux luminescents dans la direction vers l'avant (VR) et dans le court-circuit (KS) : EL + PL = VR - KS.

6. Procédé selon l'une des revendications précédentes, **caractérisé en ce que** le test s'effectue avec un consommateur (20) connecté, de préférence avec un onduleur (44), la fréquence de modulation ($f_Q$) étant de préférence produite par une mise en / hors circuit périodique, de préférence au moyen d'un commutateur à semi-conducteur (14'), ou la fréquence de l'onduleur (44) étant de préférence utilisée en tant que fréquence de modulation ($f_Q$) lors de la recherche de la MPP.

7. Procédé selon la revendication 6, **caractérisé en ce que** l'onduleur (44) est piloté par le biais d'une interface (46) avec la fréquence de modulation ($f_Q$), ou dans lequel le module photovoltaïque (12) est de préférence périodiquement mis en court-circuit par le biais d'un commutateur à semi-conducteur (14''').

8. Procédé selon l'une des revendications précédentes, **caractérisé en ce que** le module photovoltaïque est piloté par une modulation périodique de l'irradiation dans une partie de l'installation photovoltaïque avec la fréquence de modulation ($f_Q$), la modulation périodique de la puissance absorbée ou délivrée par le module étant de préférence produite optiquement, en particulier par une irradiation supplémentaire additive ou soustractive.

9. Procédé selon l'une des revendications précédentes, **caractérisé en ce que** la modulation périodique de la puissance absorbée ou délivrée par le module est produite mécaniquement, en particulier par vacillement sur le module ou par hacheur, ou dans lequel la modulation périodique de la puissance absorbée ou délivrée par le module est produite électriquement, thermiquement ou magnétiquement, en particulier par refroidissement ou chauffage périodique.

10. Dispositif destiné à tester un module photovoltaïque (12), avec un équipement (14) destiné à moduler un signal de tension alternative avec au moins une fréquence de modulation ($f_Q$) sur la puissance absorbée ou délivrée par le module photovoltaïque (12), avec une caméra (26) qui est destinée au scannage du module photovoltaïque (12) et qui délivre un signal de caméra, et avec un dispositif d'analyse (28) qui présente un montage (30) destiné à l'analyse du signal de caméra selon le procédé lock-in, le module photovoltaïque (12) n'étant mis en oeuvre que dans la direction vers l'avant, **caractérisé en ce qu'**un système de filtre (24) est monté en amont de la caméra et est perméable dans la plage de longueur d'onde dans laquelle se situent les signaux luminescents du module photovoltaïque (12), et **en ce que** le montage (30) est constitué pour le calcul d'une image luminescente.

11. Dispositif selon la revendication 10, **caractérisé en ce que**, dans un circuit électrique du module photovoltaïque (12), il y a un commutateur (14'), de préférence un commutateur à semi-conducteur, qui interrompt périodiquement le circuit électrique avec la fréquence de modulation ($f_Q$).

12. Dispositif selon l'une des revendications 10 à 11, **caractérisé en ce qu'**un commutateur (14'''), de préférence un commutateur à semi-conducteur, est connecté au module photovoltaïque (12) et met périodiquement en court-circuit le module photovoltaïque (12) avec l'au moins une fréquence de modulation ($f_Q$).

13. Dispositif selon l'une des revendications 10 à 12, **caractérisé en ce que** le module photovoltaïque (12) est connecté à un onduleur (44) qui est commandé par le biais d'une interface (46) avec l'au moins une fréquence de modulation ($f_Q$), le module photovoltaïque (12) étant de préférence commandé par une modulation périodique de la lumière irradiée avec l'au moins une fréquence de modulation (fQ), la modulation périodique de la puissance absorbée ou délivrée par le module étant plus préférablement produite optiquement avec l'au moins une fréquence de modulation (fQ), en particulier par une irradiation supplémentaire additive ou soustractive.

14. Dispositif selon l'une des revendications 10 à 13, **caractérisé en ce que** la modulation périodique de la puissance absorbée ou délivrée par le module est produite mécaniquement avec l'au moins une fréquence de modulation (fQ), en particulier par vacillement sur le module ou par hacheur, ou dans lequel la modulation périodique de la puissance absorbée ou délivrée par le module est produite électriquement, thermiquement ou magnétiquement avec l'au moins une fréquence de modulation (fQ), en particulier par refroidissement ou chauffage périodique.

15. Dispositif selon l'une des revendications 10 à 14, **caractérisé en ce que** la fréquence de modulation ($f_Q$) se situe dans la plage de 1 à 25 Hz, de préférence de 2 à 10 Hz, plus préférablement de 3 à 7 Hz.

**Fig. 1**

**Fig. 2**

**Fig. 3**

Fig.4

Fig.5

Fig.6

Fig. 7

EP 2 883 042 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20100073665 A1
- US 20100201374 A1
- EP 2463672 A1
- EP 2421052 A2

**In der Beschreibung aufgeführte Nicht-Patentliteratur**

- **J. COELLO.** Introducing Electroluminescence Technique as a Quality Control of Large PV Plants. *26th European Photovoltaic Solar Energy Conference and Exhibition,* 2011, 3469-3472
- Basics and Use for Evaluating Electronic Devices and Materials. **O. BREITENSTEIN ; W. WARTA ; M. LANGENKAMP.** Lock-in Thermography. Springer-Verlag Berlin Heidelberg, 2010